# EUROPÄISCHE PATENTSCHRIFT

(11) **EP 1 004 855 B1**
(45) Veröffentlichungstag und Bekanntmachung des Hinweises auf die Patenterteilung: **17.05.2006**
(21) Anmeldenummer: 99122917.0
(22) Anmeldetag: 18.11.1999
(51) Int. Cl.: G01D 5/347, G01B 5/00

(54) **Längenmesseinrichtung**
Length measuring device
Dispositif de mesure de longueurs

(30) Priorität: 25.11.1998 DE 19854318
(43) Veröffentlichungstag der Anmeldung: 31.05.2000
(73) Patentinhaber: Dr. Johannes Heidenhain GmbH, 83292 Traunreut (DE)
(72) Erfinder: Tondorf, Sebastian Dr., 83329 Waging (DE); Pechak, Peter, 83371 Stein/Traun (DE)

(56) Entgegenhaltungen:
- EP-A- 0 387 488
- DE-A- 4 435 151
- US-A- 4 603 480
- US-A- 4 777 728
- US-A- 5 711 084

## Beschreibung

Die Erfindung bezieht sich auf eine Längenmeßeinrichtung gemäß dem Oberbegriff des Anspruchs 1.

Eine derartige Längenmeßeinrichtung ist in der EP 0 264 801 B1 beschrieben. Zur Vermeidung von Verformungen des Maßstabs aufgrund von Kräften, die aus der unterschiedlichen thermischen Längenausdehnung des Maßstabs und seiner Fassung und der Art und Weise seiner Befestigung entstehen, ist der Maßstab in seinen Besselpunkten gelagert. Diese Lagerung erfolgt durch eine Kugelauflage mittels rollbeweglich gehaltenen Kugeln und einer seitlichen Längsführung mittels weiterer Kugeln, wobei eine dieser weiteren Kugeln den Maßstab gegenüber der Fassung in Meßrichtung fixiert. Zur Aufrechterhaltung des Kontaktdrucks zwischen dem Maßstab und den Kugeln sowie der Fassung und den Kugeln sind Federn vorgesehen.

Durch die angegebenen Maßnahmen ist eine zwangskräftefreie Halterung des Maßstabs in seiner Fassung nicht gewährleistet. Die Übertragung von Verbiegungen der Fassung auf den Maßstab ist nicht ausgeschlossen.

Der Erfindung liegt daher die Aufgabe zugrunde, eine Längenmeßeinrichtung anzugeben, bei der der Maßstab in seiner Fassung möglichst kräftefrei gelagert ist und bei der eine Verformung der Fassung den Maßstab und somit die Meßgenauigkeit möglichst wenig beeinflußt.

Diese Aufgabe wird durch die Merkmale des Anspruchs 1 gelöst.

Bei dieser Längenmeßeinrichtung ist der Maßstab von seiner Fassung weitestgehend entkoppelt. Die erforderliche Fixierung des Maßstabs an der Fassung ist optimiert. Der Maßstab kann sich bei Temperaturänderungen weitgehend kräftefrei gegenüber seiner Fassung bewegen und Verformungen der Fassung werden nicht auf den Maßstab übertragen.

Anhand der Zeichnungen wird die Erfindung näher erläutert.
Es zeigt:
- Figur 1: eine Draufsicht einer Längenmeßeinrichtung,
- Figur 2: einen Schnitt II-II der Längenmeßeinrichtung gemäß Figur 1,
- Figur 3: einen Schnitt III-III der Längenmeßeinrichtung gemäß Figur 1,
- Figur 4: eine Unteransicht des Maßstabs der Längenmeßeinrichtung,
- Figur 5: einen Querschnitt der Längenmeßeinrichtung gemäß Figur 1 im Bereich B1 in vergrößerter Darstellung,
- Figur 6: einen Querschnitt der Längenmeßeinrichtung gemäß Figur 1 im Bereich B2 in vergrößerter Darstellung,
- Figur 7: eine Ausführung eines starren Koppelpunktes B1,
- Figur 8: eine Ausführung eines flexiblen Koppelpunktes B2,
- Figur 9: eine Ausführung einer Auflage des Maßstabes 2 und
- Figur 10: ein Detail einer Kugellagerung.

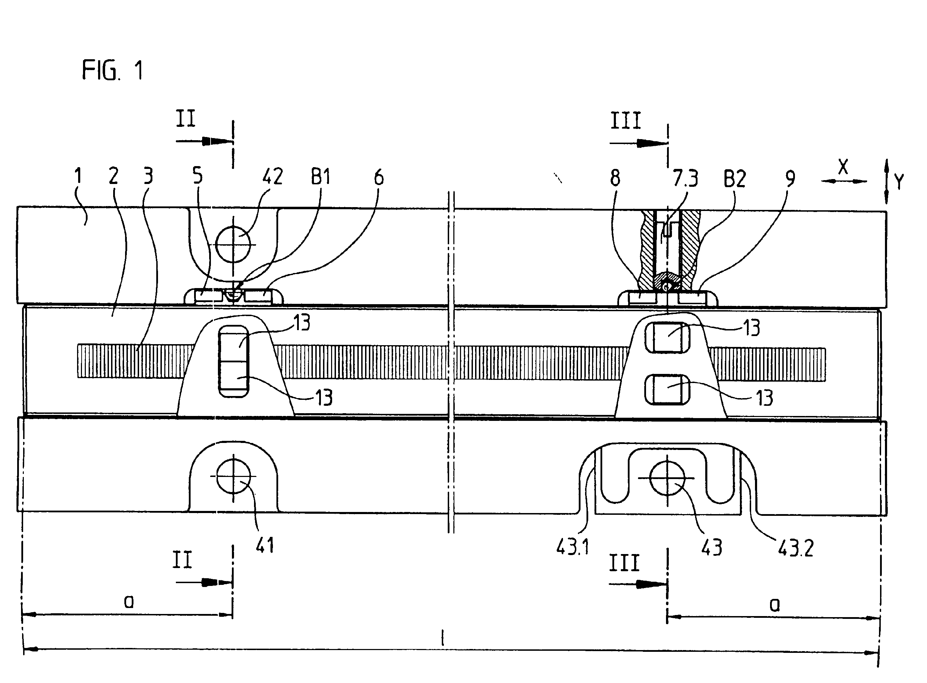

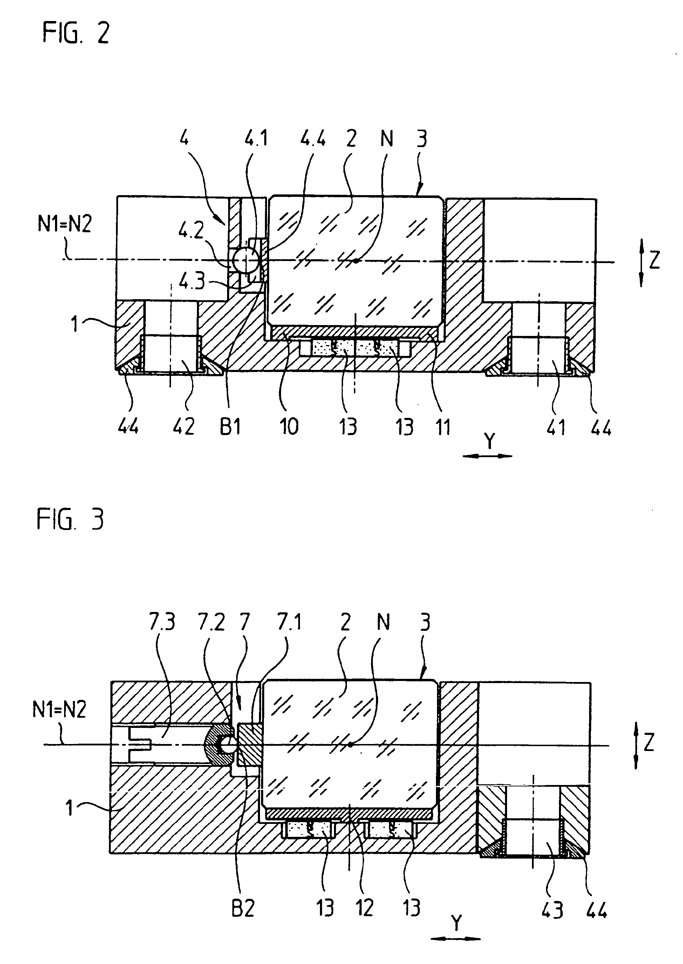

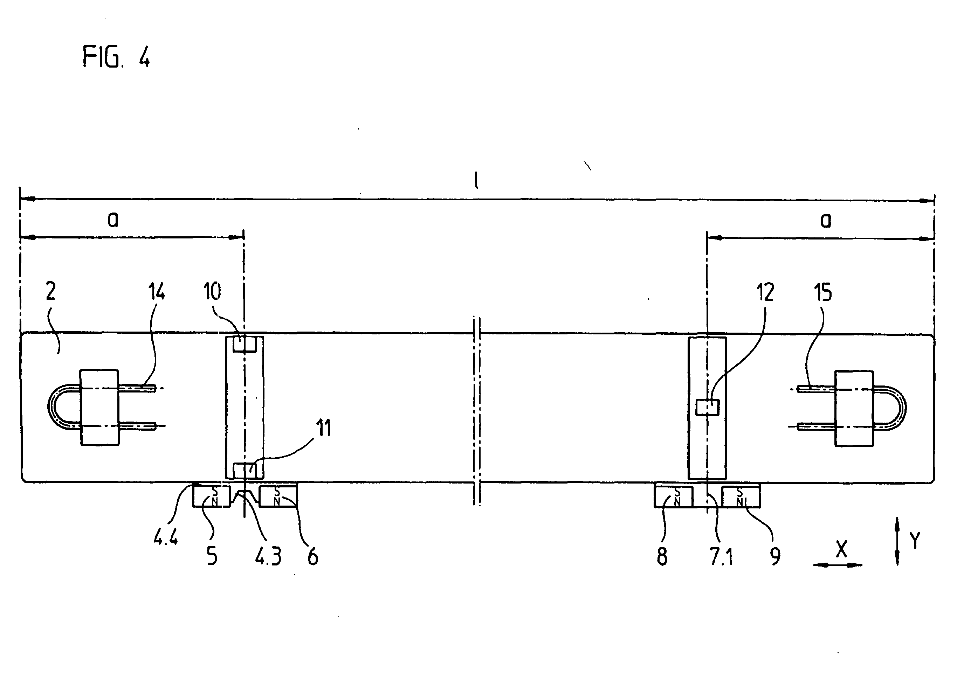

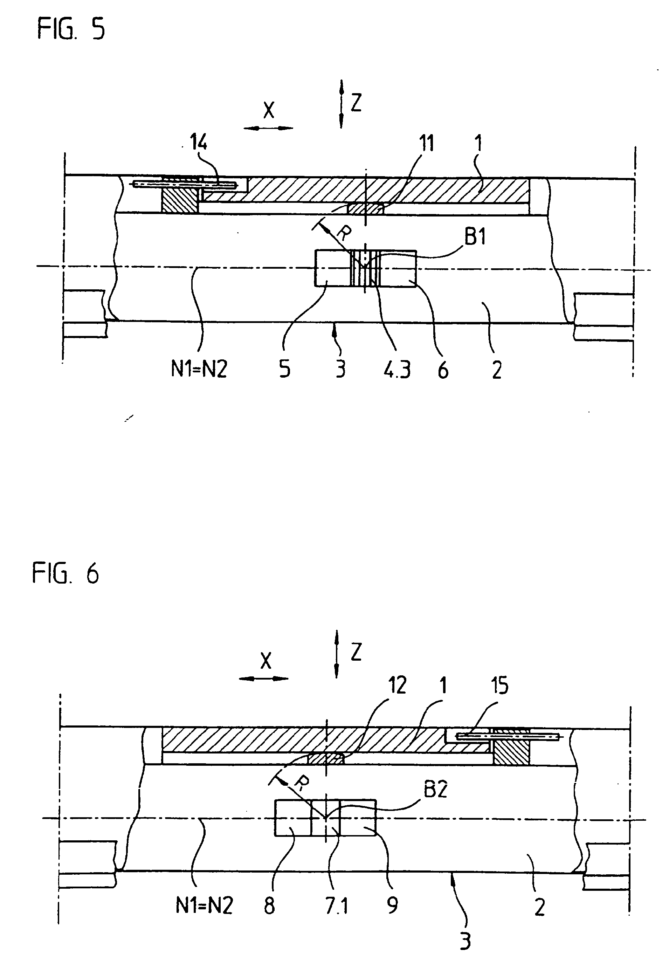

In den Figuren 1 bis 6 ist ein Ausführungsbeispiel der Erfindung im Detail dargestellt. Der in einer Fassung 1 gehaltene Maßstab 2 ist ein Glasmaßstab insbesondere aus Glaskeramik mit einem zu vernachlässigenden Ausdehnungskoeffizient. Der Maßstab 2 trägt auf seiner Oberseite eine inkrementale Teilung 3 bestehend aus einem Strichgitter mit einer Teilungsperiode von einigen nm. Die Teilung 3 besteht aus einem reflektierenden Phasengitter oder aus in Meßrichtung X abwechselnd angeordneten reflektierenden und nichtreflektierenden Bereichen, die zur Positionsmessung in Längsrichtung X des Maßstabs 2 von einer an sich bekannten und daher nicht dargestellten photoelektrischen Abtasteinheit abgetastet werden.

Die Ankopplung des Maßstabs 2 an der Fassung 1 erfolgt an einer Stelle B1 - in Meßrichtung X betrachtet - starr. Dieser starre Befestigungspunkt B1 liegt - in Z-Richtung betrachtet - in einer Ebene N1 der Fassung 1, die parallel zur die Teilung 3 tragenden Oberfläche des Maßstabs 2, also parallel zur Teilungsebene verläuft und welche die neutrale Faser N der Fassung 1 enthält. Die neutrale Faser N ist der Bereich (Linie) eines Körpers, der bei einer Verbiegung keine Längenänderung erfährt. Die Ebene N1 ist die Ebene der Fassung 1, die bei einer Krafteinwirkung senkrecht zu dieser Ebene N1 in Z-Richtung gerichtet und somit bei einer Verbiegung der Fassung 1 in dieser Richtung keine Längenänderung in Meßrichtung X erfährt. Die Ebene N1 wird daher nachfolgend als neutrale Ebene N1 bezeichnet.

Der Befestigungspunkt B1 liegt auch in einer Ebene N2 des Maßstabs 2, die parallel zur Oberfläche des Maßstabes 2, also parallel zur Teilungsebene verläuft und die neutrale Faser des Maßstabes 2 enthält. Diese Ebene N2 wird nachfolgend als neutrale Ebene N2 bezeichnet.

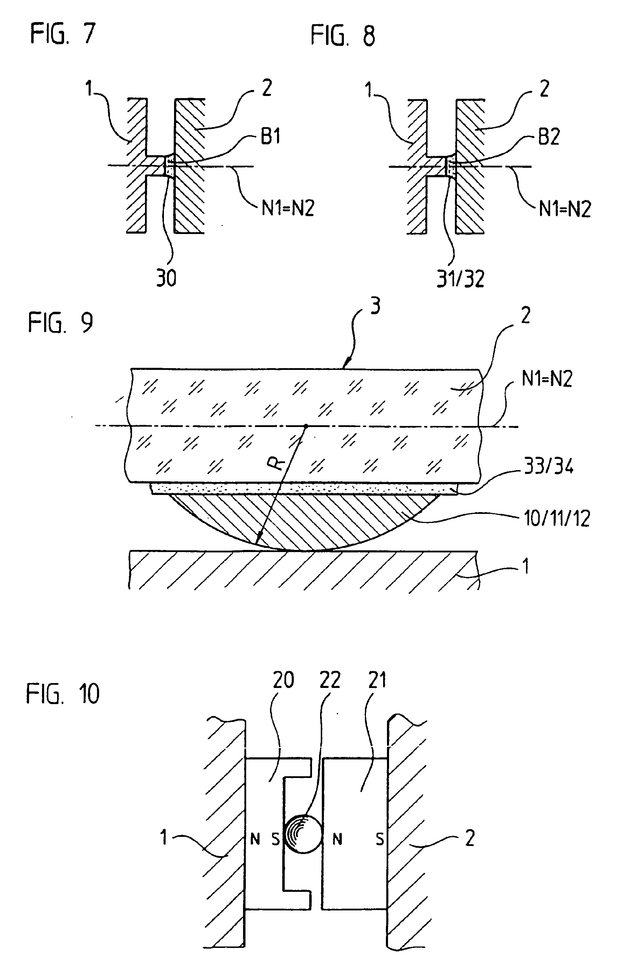

Der fixe Koppelpunkt B1 kann als starre Klebung ausgeführt sein, wozu ein fest aushärtender Klebstoff 30 eingesetzt ist (Figur 7).

Vorteilhafterweise wird der fixe Koppelpunkt B1 aber als Kugellagerung 4 ausgeführt, wie im dargestellten Beispiel gemäß den Figuren 1 bis 6. Diese Kugellagerung 4 besteht aus einer Kugel 4.1, einer Bohrung 4.2 in der Fassung 1 zur Fixierung der Kugel 4.1 und einer Linearführung für die Kugel 4.1 am Maßstab 2. Die Linearführung ist eine prismenförmige und in Z-Richtung verlaufende Ausnehmung 4.3. Diese Ausnehmung 4.3 kann direkt im Maßstab 2 ausgebildet sein, oder als separates Bauteil 4.4 am Maßstab 2 starr befestigt sein. Dabei ist es von Vorteil, wenn das Bauteil 4.4 aus einem Material besteht, das den gleichen thermischen Ausdehnungskoeffizienten hat, wie der Maßstab 2, um Verspannungen zu vermeiden. Durch diese Ankopplung im Punkt B1 ist eine in Meßrichtung X starre Kopplung zwischen der Fassung 1 und dem Maßstab 2 gewährleistet.

Um eine möglichst spielfreie und doch zwangskräftefrei Lagerung des Maßstabs 2 am Punkt B1 zu erreichen, wird der Maßstab 2 mit Hilfe von Magneten 5 und 6 an die Fassung 1 gedrängt. Die Magnete 5, 6 sind beispielsweise am Maßstab 2 angeklebt. Damit durch die Magnetkraft keine Hebelkräfte erzeugt werden, sind die Magnete 5 und 6 punktsymmetrisch zum Koppelpunkt B1 angeordnet. In nicht gezeigter Weise kann nur ein Magnet eingesetzt werden, der beispielsweise zentrisch zur Kugel 4.1 angeordnet ist.

Der Maßstab 2 wird an zumindest einer weiteren vom Fixpunkt B1 beabstandet angeordneten Stelle B2 an die Fassung 1 gedrängt. An dieser Stelle B2 liegt der Maßstab 2 gleitbeweglich an der Fassung 1 an. Da eine derartige Anlage nie ganz reibungsfrei gestaltet werden kann, und bei einer Reibung zwischen Fassung 1 und Maßstab 2 eine Verbiegung des Maßstabs 2 verhindert werden soll, ist der Auflagepunkt B2 wiederum in der neutralen Ebene N1 der Fassung 1 und in vorteilhafterweise auch in der neutralen Ebene N2 des Maßstabs 2 angeordnet, wobei dann N1 und N2 eine gemeinsame Ebene bilden.

Im Beispiel ist die Anlage im Punkt B2 auch als Kugellagerung 7 ausgebildet. Sie besteht aus einer Platte 7.1 am Maßstab 2, auf der eine Kugel 7.2 abrollen kann. Dabei ist es von Vorteil, wenn die Platte 7.1 aus einem Material besteht, das den gleichen thermischen Ausdehnungskoeffizienten hat, wie der Maßstab 2, um Verspannungen zu vermeiden. Die Kugel 7.2 ist in einem Halter 7.3 der Fassung 1 rollbeweglich gelagert. Zur Ausrichtung des Maßstabs 2 ist es vorteilhaft, wenn die Kugel 7.2 relativ zur Fassung 1 in Y-Richtung verstellbar ist. Hierzu ist der Halter 7.3 als Schraube ausgeführt und in der Fassung 1 durch Verdrehen in Y-Richtung verschiebbar.

Auch am Punkt B2 wird der Maßstab 2 über Magnete 8 und 9 an die Kugel 7.2 und somit an die Fassung 1 gedrängt. Die Magnete 8 und 9 sind wiederum punktsymmetrisch zum Koppelpunkt B2 angeordnet, so daß die daraus resultierende Kraft zentrisch im Punkt B2 wirkt und keine Hebelkraft ausübt. In nicht gezeigter Weise kann auch wiederum nur ein Magnet eingesetzt werden.

Der Lagerpunkt B2 gewährleistet eine freie Verschiebbarkeit der Fassung 1 gegenüber dem Maßstab 2 in Meßrichtung X. Trotz auftretender Reibung an diesem Lagerpunkt B2 wirkt keine Hebelkraft und somit Verbiegekraft auf den Maßstab 2, da die Haftreibung in der neutralen Ebene N2 des Maßstabs 2 angreift.

Die in Meßrichtung X möglichst reibungsfreie und kräftefreie Lagerung des Maßstabs 2 im Punkt B2 kann auch durch eine Klebung realisiert sein. Als Klebstoff wird eine in Meßrichtung X verlaufende elastische dünne Klebstoffschicht 31 zwischen der Fassung 1 und dem Maßstab 2 im Punkt B2 verwendet (Figur 8). Anstelle der Klebstoffschicht 31 kann auch ein viskoser Flüssigkeitsfilm 32 - z.B. Silikonöl - eingesetzt werden (Figur 8).

Vorteilhaft ist es auch, wenn die zwei Koppelpunkte B1 und B2 zumindest etwa in den Besselschen Punkten des Maßstabs 2 liegen, also der Abstand a von den Enden etwa 0,22 mal der Gesamtlänge l ist.

Der Maßstab 2 soll möglichst stabil und schwingungsfest sein und den einwirkenden Kräften einen möglichst großen Widerstand entgegensetzen. Aus diesem Grund ist der Maßstab 2 relativ stabil und schwer ausgeführt, was eine Unterstützung erforderlich macht. Diese Unterstützung erfolgt vorteilhafterweise an zwei in Meßrichtung X voneinander beabstandeten Stellen im Bereich der Besselschen Punkte des Maßstabs 2, also jeweils 0,22 x l von den Enden entfernt. Bei dieser Unterstützung ist die Durchbiegung des Maßstabs 2 und die Längenänderung im Bereich seiner Teilung 3 am geringsten. Die Unterstützung kann als Dreipunktlagerung ausgeführt sein. Die Lagerstellen B3, B4, B5 zur Unterstützung sollen den Maßstab möglichst reibungsfrei und kräftefrei gegenüber der Fassung 1 in Meßrichtung X frei beweglich lagern. An diesen Lagerstellen B3, B4, B5 können Kugeln rollbeweglich zwischen der Fassung 1 und dem Maßstab eingebracht sein, oder es können elastische Klebstoffschichten bzw. viskose Flüssigkeitsschichten vorgesehen sein, ähnlich den Ausführungen gemäß Figur 8. Im dargestellten Beispiel ist an den drei Lagerstellen B3, B4 und B5 jeweils ein Element 10, 11, 12 vorgesehen, das an einer Fläche der Fassung 1 aufliegt. Im Bereich des Kontakts zwischen Fassung 1 und Element 10, 11, 12 haben die Elemente 10, 11, 12 jeweils eine Oberflächenkrümmung (in Meßrichtung X verlaufend) mit einem Radius R, wobei R dem Abstand zwischen der Kontaktfläche und der neutralen Ebene N1 entspricht. Bei einer Verbiegung der Fassung 1 bewegt sich die Kontaktfläche (Auflagefläche) aufgrund einer Längenänderung relativ zur neutralen Ebene N1 um den Radius R, es kann somit ein reibungsfreies Abrollen erfolgen.

Zusätzlich können die Lagerstellen B3, B4, B5 auch noch als reibungsfreie in X-Richtung wirkende Längsführungen ausgebildet sein, indem zwischen den Kontaktflächen der Fassung 1 und der Elemente 10, 11, 12 und/oder insbesondere zwischen den parallel zur Meßrichtung X verlaufenden ebenen Flächen der Elemente 10, 11, 12 und dem Maßstab 2 eine elastische Klebeschicht 33 oder ein viskoser Flüssigkeitsfilm 34 eingebracht ist (Figur 9). Durch diese Maßnahme werden auch unterschiedliche Längenänderungen des Maßstabs 2 relativ zur Fassung, welche durch Temperaturänderungen hervorgerufen werden, reibungsfrei ausgeglichen. Dies ist im dargestellten Beispiel vorteilhaft, da der Maßstab 2 und die Fassung 1 aus unterschiedlichen Materialien bestehen, nämlich aus Glas bzw. aus Stahl.

Jeder der Lagerstellen B3, B4 und B5 ist zumindest ein Magnet 13 zugeordnet, welcher den Maßstab 2 an die Fassung 1 drängt. Bei Verwendung eines einzigen Magneten pro Lagerstelle B3, B4 und B5 ist dieser vorteilhafterweise symmetrisch zur Lagerstelle B3, B4, B5 angeordnet, so daß sein Magnetfeld symmetrisch zur Lagerstelle B3, B4, B5 verläuft. Für jede Lagerstelle B3, B4, B5 können auch wiederum mehrere Magnete 13 jeweils symmetrisch zu einer der Lagerstellen B3, B4, B5 angeordnet sein.

Das beschriebene Beispiel ist eine optimierte Anordnung, wenn der Maßstab 2 aus Glas und die Fassung 1 aus einem Material mit einem von Glas abweichenden Ausdehnungskoeffizient, insbesondere Stahl besteht. Die in Z-Richtung wirksame Linearführung in Form der Ausnehmung 4.3 im Punkt B1 ist zur einfachen Montage vorteilhaft und gleicht bei dem aufgelegten Maßstab 2 auch unterschiedliche thermische Längenänderungen von Maßstab 2 und Fassung 1 in Z-Richtung aus.

Die prismenförmige Ausnehmung kann durch eine Kegelbohrung oder eine Vertiefung in Form eines Tetraeders oder einer Pyramide ersetzt werden, die den Maßstab 2 relativ zur Fassung 1 auch in Z-Richtung fixiert und allenfalls eine Drehbewegung des Maßstabs 2 relativ zur Fassung 1 im Punkt B1 reibungsfrei zuläßt. Dieser Freiheitgrad bezüglich Drehung ist vorteilhaft, da Verbiegungen der Fassung 1 gegenüber dem Maßstab 2 eine Verdrehung der Fassung 1 im Ankoppelpunkt B1 verursacht, die nicht auf den Maßstab 2 übertragen werden soll.

Besteht der Maßstab 2 und die Fassung 1 aus Materialien mit gleichen thermischen Ausdehnungskoeffizienten, kann einerseits der Maßstab 2 im Punkt B1 in X-, Y- und Z-Richtung starr angekoppelt werden. Zusätzlich ist bei dieser Ausgestaltung auch eine derartige starre Ankopplung des Maßstabs 2 im Punkt B2 möglich. Drehbewegungen um eine in Y-Richtung verlaufende Drehachse sollten aber grundsätzlich in beiden Punkten B1 und B2 möglichst reibungsfrei ermöglicht werden. Vorteilhafterweise sind auch Schwenkbewegungen an den Koppelpunkten B1 und B2 möglich.

Während des normalen Betriebs reicht die Magnetkraft aus, um eine optimale Ankopplung zu gewährleisten. Um aber beispielsweise während des Transports ein Herausfallen des Maßstabs 2 aus seiner Fassung 1 zu vermeiden, sind am Maßstab 2 Anschläge 14 und 15 vorgesehen, welche erst nach einer vorgegebenen Verlagerung des Maßstabs 2 relativ zur Fassung 1 wirksam werden. In der normalen Betriebsstellung sind die Anschläge 14, 15 unwirksam und in Abstand von der Fassung 1 angeordnet. Der Abstand ist so gewählt, daß die Magnetkraft noch ausreicht, damit sich die oben beschriebene Ankopplung auch bei extremer Verlagerung noch selbständig einstellt.

Die Magnete der Lagerstellen B2 bis B5 können auch so ausgeführt sein, daß die Kugeln 22 sich zwischen den Magneten 20 und 21 selbst zentrieren. Diese Anordnung ist in Figur 10 schematisch dargestellt. Die Magnete 20 und 21 sind hintereinander in Richtung der gewünschten Krafteinwirkung angeordnet und dazwischen ist die Kugel 22 rollend eingespannt. Diese Einspannung wird einerseits durch die Anziehungskraft der Magnete 20 und 21 hervorgerufen und andererseits wird die Kugel 22 durch den Verlauf der Magnetfeldlinien optimal zentriert. Die Kugel 22 muß dabei aus ferromagnetischem Material bestehen, so daß sich der Magnetfluß durch die Kugel 22 konzentriert, diese Konzentration des Magnetflußes erzeugt die Rückstellkraft bei einer Dezentrierung der Kugel 22. Eine gewisse Rückstellkraft wird auch erreicht, wenn nur einer der Magnete 20 oder 21 zwischen der Kugel 22 und der Fassung 1 oder zwischen der Kugel 22 und dem Maßstab 2 vorgesehen ist.

Die Fassung 1 weist Befestigungselemente 41, 42, 43 mit Bohrungen auf, mit der die Fassung 1 starr an einem zu messenden Maschinenteil befestigt, insbesondere angeschraubt werden kann. Die Befestigungselemente 41, 42, 43 sind so angeordnet, daß eine Aufspannung (Befestigung) der Fassung 1 in den Besselschen Punkten der Fassung 1 erfolgt. Eines der Befestigungselemente 43 ist als Längenausgleichselement ausgeformt, indem der Bereich der Bohrung über zwei Stege 43.1 und 43.2 in Meßrichtung X beweglich an der Fassung 1 angelenkt ist. Zum Ausgleich von Unebenheiten sind Kugelscheiben 44 zwischen der Fassung 1 und der Anschraubfläche des Maschinenteils angeordnet. Die Befestigungselemente 41, 42, 43 bilden eine Dreipunktlagerung für den Maßstab 2 in der Fassung 1.

Die Fassung 1 kann in nicht gezeigter Weise auch eine Abdeckung für den Maßstab 2 beispielsweise in Form von Dichtlamellen oder in Form eines Stahlbandes enthalten.

Die Teilung 3 kann auch kapazitiv, induktiv oder magnetisch abtastbar ausgebildet sein. Die Teilung 3 kann eine inkrementale oder eine absolute ein- oder mehrspurige Codeteilung sein.

## Patentansprüche

1. Längenmeßeinrichtung mit einem Maßstab (2), der eine Teilung (3) aufweist und der in einer Fassung (1) gehalten ist, indem er an einem Punkt (B1) in Meßrichtung (X) starr und an weiteren Punkten (B2, B3, B4, B5) in Meßrichtung (X) beweglich an der Fassung (1) angekoppelt ist, **dadurch gekennzeichnet, daß** zumindest der starre Ankoppelpunkt (B1) in einer Ebene (N1) der Fassung (1) liegt, welche die neutrale Faser (N) der Fassung (1) enthält und die Teilung (3) in einer Ebene des Maßstabs (2) angeordnet ist, die parallel zu dieser Ebene (N1) der Fassung (1) ausgerichtet ist.

2. Längenmeßeinrichtung nach Anspruch 1, **dadurch gekennzeichnet, daß** der starre Ankoppelpunkt (B1) in einer Ebene (N2) des Maßstabs (2) liegt, welche die neutrale Faser des Maßstabs (2) enthält und die Teilung (3) in einer Ebene des Maßstabs (2) angeordnet ist, die parallel zu dieser Ebene (N2) des Maßstabs (2) ausgerichtet ist.

3. Längenmeßeinrichtung nach Anspruch 1 oder 2, **dadurch gekennzeichnet, daß** der starre Ankoppelpunkt (B1) zumindest annähernd 0,22 mal der Maßstablänge l von einem Ende des Maßstabs (2) beabstandet angeordnet ist.

4. Längenmeßeinrichtung nach einem der vorhergehenden Ansprüche, **dadurch gekennzeichnet, daß** der Maßstab (2) an dem einen Punkt (B1) in Meßrichtung (X) starr und an einem weiteren Punkt (B2) in Meßrichtung (X) beweglich an der Fassung (1) angekoppelt ist, wobei beide Punkte (B1, B2) in der Ebene (N1) der Fassung (1) liegen, welche die neutrale Faser (N) der Fassung (1) enthält.

5. Längenmeßeinrichtung nach Anspruch 4, **dadurch gekennzeichnet, daß** der starre Ankoppelpunkt (B1) eine Klebestelle ist.

6. Längenmeßeinrichtung nach Anspruch 4, **dadurch gekennzeichnet, daß** der starre Ankoppelpunkt (B1) eine Punktlagerung (4) ist, wobei die Lagerteile (4.1, 4.3) der Fassung (1) und des Maßstabs (2) durch Magnetkraft aneinander gedrängt werden.

7. Längenmeßeinrichtung nach Anspruch 6, **dadurch gekennzeichnet, daß** die Punktlagerung eine Kugellagerung (4) ist, bei der eine Kugel (4.1) in einer Ausnehmung (4.3) drehbar gelagert ist.

8. Längenmeßeinrichtung nach einem der Ansprüche 4 bis 7, **dadurch gekennzeichnet, daß** am beweglichen Koppelpunkt (B2) eine elastische Klebstoffschicht (31) oder ein viskoser Flüssigkeitsfilm (32) zwischen der Fassung (1) und dem Maßstab (2) eingebracht ist und den Maßstab (2) haftend an der Fassung (1) hält.

9. Längenmeßeinrichtung nach einem der Ansprüche 4 bis 7, **dadurch gekennzeichnet, daß** der bewegliche Koppelpunkt (B2) eine Punktlagerung (7) ist, wobei die Lagerteile (7.1, 7.2) der Fassung (1) und des Maßstabs (2) durch Magnetkraft aneinander gedrängt werden.

10. Längenmeßeinrichtung nach Anspruch 9, **dadurch gekennzeichnet, daß** die Punktlagerung eine Kugellagerung (7) ist, bei der eine Kugel (7.2) an einer ebenen Platte (7.1) verschiebbar und verdrehbar gelagert ist.

11. Längenmeßeinrichtung nach einem der Ansprüche 4 bis 10, **dadurch gekennzeichnet, daß** eine Vorrichtung (7.3) an der Fassung (1) vorgesehen ist, mit der einer der beiden Koppelpunkte (B1, B2) quer zur Meßrichtung (X) verlagerbar ist.

12. Längenmeßeinrichtung nach einem der vorhergehenden Ansprüche, **dadurch gekennzeichnet, daß** der Maßstab (2) an dem einen Punkt (B1) in Meßrichtung (X) starr angekoppelt ist, und daß der Maßstab (2) an weiteren Punkten (B3, B4, B5) beweglich an der Fassung (1) angekoppelt ist, indem er an diesen Punkten (B3, B4, B5) aufliegt, wobei diese Auflagepunkte (B3, B4, B5) in einer Ebene gegenüber der Teilung (3) angeordnet sind.

13. Längenmeßeinrichtung nach Anspruch 12, **dadurch gekennzeichnet, daß** die Auflagepunkte (B3, B4, B5) zumindest annähernd 0,22 mal der Maßstablänge l von den Enden des Maßstabs (2) beabstandet angeordnet sind.

14. Längenmeßeinrichtung nach Anspruch 12 oder 13, **dadurch gekennzeichnet, daß** die Auflagepunkte (B3, B4, B5) eine Dreipunktlagerung bilden.

15. Längenmeßeinrichtung nach einem der Ansprüche 12 bis 14, **dadurch gekennzeichnet, daß** der Maßstab (2) über Elemente (10, 11, 12) mit einer in Meßrichtung (X) verlaufenden gekrümmten Oberfläche an der Fassung (1) aufliegt, und der Krümmungsradius (R) dieser Oberfläche dem Abstand zwischen der Ebene (N1), welche die neutrale Faser (N) der Fassung (1) enthält und den Auflagepunkten (B3, B4, B5) entspricht.

16. Längenmeßeinrichtung nach einem der Ansprüche 12 bis 15, **dadurch gekennzeichnet, daß** der Maßstab (2) an den Auflagepunkten (B3, B4, B5) durch Magnetkraft an die Fassung (1) gedrängt wird.

## Claims

1. Length measuring device having a scale (2) which has a graduation (3) and is held in a mounting (1) by being coupled to the mounting (1) fixedly in the measuring direction (X) at one point (B1), and at other points (B2, B3, B4, B5) so as to be moveable in the measuring direction (X), **characterised in that** at least the fixed coupling point (B1) lies in a plane (N1) of the mounting (1) which contains the neutral axis (N) of the mounting (1) and the graduation (3) is arranged in a plane of the scale (2) which is aligned parallel to this plane (N1) of the mounting (1).

2. Length measuring device according to claim 1, **characterised in that** the fixed coupling point (B1) lies in a plane (N2) of the scale (2) which contains the neutral axis of the scale (2) and the graduation (3) is arranged in a plane of the scale (2) which is aligned parallel to this plane (N2) of the scale (2).

3. Length measuring device according to claim 1 or 2, **characterised in that** the fixed coupling point (B1) is arranged at a distance from one end of the scale (2) which is at least approximately 0.22 times the length 1 of the scale.

4. Length measuring device according to one of the preceding claims, **characterised in that** the scale (2) is coupled to the mounting (1) at the one point (B1) fixedly in the measuring direction (X) and at a further point (B2) so as to be moveable in the measuring direction (X), both points (B1, B2) lying in the plane (N1) of the mounting (1) which contains the neutral axis (N) of the mounting (1).

5. Length measuring device according to claim 4, **characterised in that** the fixed coupling point (B1) is a glued joint.

6. Length measuring device according to claim 4, **characterised in that** the fixed coupling point (B1) is a spot bearing assembly (4), the bearing parts (4.1, 4.3) of the mounting (1) and of the scale (2) being urged against each other by magnetic force.

7. Length measuring device according to claim 6, **characterised in that** the spot bearing assembly is a ball bearing assembly (4) in which a ball (4.1) is rotatably mounted in a recess (4.3).

8. Length measuring device according to one of claims 4 to 7, **characterised in that**, at the moveable coupling point (B2), a resilient adhesive layer (31) or a viscous liquid film (32) is introduced between the mounting (1) and the scale (2) and holds the scale (2) adhering to the mounting (1).

9. Length measuring device according to one of claims 4 to 7, **characterised in that** the moveable coupling point (B2) is a spot bearing assembly (7), the bearing parts (7.1, 7.2) of the mounting (1) and of the scale (2) being urged against each other by magnetic force.

10. Length measuring device according to claim 9, **characterised in that** the spot bearing assembly is a ball bearing assembly (7) in which a ball (7.2) is mounted on a flat plate (7.1) so as to be displaceable and rotatable.

11. Length measuring device according to one of claims 4 to 10, **characterised in that** a device (7.3) is provided on the mounting (1), by means of which one of the two coupling points (B1, B2) may be displaced transversely with respect to the measuring direction (X).

12. Length measuring device according to one of the preceding claims, **characterised in that** the scale (2) is coupled to the mounting at the one point (B1) fixedly in the measuring direction (X), and **in that** the scale (2) is coupled to the mounting at other points (B3, B4, B5) so as to be moveable, by resting on these points (B3, B4, B5), these support points (B3, B4, B5) being arranged in one plane opposite the graduation (3).

13. Length measuring device according to claim 12, **characterised in that** the support points (B3, B4, B5) are arranged at a distance from the ends of the scale (2) which is at least approximately 0.22 times the length 1 of the scale.

14. Length measuring device according to claim 12 or 13, **characterised in that** the support points (B3, B4, B5) form a three-point bearing assembly.

15. Length measuring device according to one of claims 12 to 14, **characterised in that** the scale (2) rests on the mounting (1) via elements (10, 11, 12) which have a curved surface extending in the measuring direction (X), and the radius of curvature (R) of this surface corresponds to the spacing between the plane (N1), which contains the neutral axis (N) of the mounting (1), and the support points (B3, B4, B5).

16. Length measuring device according to one of claims 12 to 15, **characterised in that** the scale (2) is urged against the mounting (1) by magnetic force at the support points (B3, B4, B5).

## Revendications

1. Dispositif de mesure de longueurs comprenant une règle de mesure (2) qui présente une graduation (3) et est tenue dans un châssis (1) en étant fixée au châssis (1) en un point (B1), de façon rigide dans la direction de mesure (X), et en d'autres points (B2, B3, B4, B5), avec possibilité de déplacement dans la direction de mesure (X), **caractérisé par le fait qu'**au moins le point de fixation (B1) rigide se situe dans un plan (N1) du châssis (1) qui contient la fibre neutre (N) du châssis (1) et la graduation (3) est disposée dans un plan de la règle de mesure (2) qui est parallèle à ce plan (N1) du châssis (1).

2. Dispositif de mesure de longueurs selon la revendication 1, **caractérisé par le fait que** le point de fixation (B1) rigide se situe dans un plan (N2) de la règle de mesure (2) qui contient la fibre neutre de la règle de mesure (2) et la graduation (3) est disposée dans un plan de la règle de mesure (2) qui est parallèle à ce plan (N2) de la règle (2).

3. Dispositif de mesure de longueurs selon la revendication 1 ou 2, **caractérisé par le fait que** le point de fixation (B1) rigide est disposé à une distance d'une extrémité de la règle de mesure (2) qui correspond au moins approximativement à 0,22 fois la longueur 1 de la règle de mesure.

4. Dispositif de mesure de longueurs selon une des revendications précédentes, **caractérisé par le fait que** la règle de mesure (2) est fixée au châssis (1) en un point (B1), de manière rigide dans la direction de mesure (X), et en un autre point (B2), avec possibilité de déplacement dans la direction de mesure (X), les deux points (B1, B2) se situant dans le plan (N1) du châssis (1) qui contient la fibre neutre (N) du châssis (1).

5. Dispositif de mesure de longueurs selon la revendication 4, **caractérisé par le fait que** le point de fixation (B1) rigide est un point de collage.

6. Dispositif de mesure de longueurs selon la revendication 4, **caractérisé par le fait que** le point de fixation (B1) rigide est un moyen de support ponctuel (4), les éléments de support (4.1, 4.3) du châssis (1) et de la règle de mesure (2) étant poussés l'un contre l'autre par une force magnétique.

7. Dispositif de mesure de longueurs selon la revendication 6, **caractérisé par le fait que** le moyen de support ponctuel est un support à bille (4), dans lequel une bille (4.1) est montée tournante dans un évidement (4.3).

8. Dispositif de mesure de longueurs selon une des revendications 4 à 7, **caractérisé par le fait que**, au niveau du point de fixation (B2) mobile, une couche d'adhésif (31) élastique ou un film de liquide (32) visqueux est placé(e) entre le châssis (1) et la règle de mesure (2) et maintient la règle (2) par adhérence sur le châssis (1).

9. Dispositif de mesure de longueurs selon une des revendications 4 à 7, **caractérisé par le fait que** le point de fixation (B2) mobile est un moyen de support ponctuel (7), les éléments de support (7.1, 7.2) du châssis (1) et de la règle de mesure (2) étant poussés l'un contre l'autre par une force magnétique.

10. Dispositif de mesure de longueurs selon la revendication 9, **caractérisé par le fait que** le moyen de support ponctuel est un support à bille (7), dans lequel une bille (7.2) est montée sur une plaque (7.1) plane avec possibilité de déplacement en translation et de rotation.

11. Dispositif de mesure de longueurs selon une des revendications 4 à 10, **caractérisé par le fait que** le châssis (1) comporte un mécanisme (7.3) qui permet de déplacer l'un des deux points de fixation (B1, B2) perpendiculairement à la direction de mesure (X).

12. Dispositif de mesure de longueurs selon une des revendications précédentes, **caractérisé par le fait que** la règle de mesure (2) est fixée au point (B1), de manière rigide dans la direction de mesure (X), et **par le fait que** la règle de mesure (2) est fixée de manière mobile à d'autres points (B3, B4, B5) du châssis (1) en étant en appui sur ces points (B3, B4, B5), ces points d'appui (B3, B4, B5) étant disposés dans un même plan par rapport à la graduation (3).

13. Dispositif de mesure de longueurs selon la revendication 12, **caractérisé par le fait que** les points d'appui (B3, B4, B5) sont disposés à une distance des extrémités de la règle de mesure (2) qui correspond au moins approximativement à 0,22 fois la longueur 1 de la règle de mesure (2).

14. Dispositif de mesure de longueurs selon la revendication 12 ou 13, **caractérisé par le fait que** les points d'appui (B3, B4, B5) constituent un moyen de support à trois points.

15. Dispositif de mesure de longueurs selon une des revendications 12 à 14, **caractérisé par le fait que** la règle de mesure (2) est en appui sur le châssis (1) par l'intermédiaire d'éléments (10, 11, 12) comportant une surface incurvée qui s'étend dans la direction de mesure (X) et que le rayon de courbure (R) de cette surface correspond à la distance entre le plan (N1) contenant la fibre neutre (N) du châssis (1) et les points d'appui (B3, B4, B5).

16. Dispositif de mesure de longueurs selon une des revendications 12 à 15, **caractérisé par le fait que** la règle de mesure (2) est pressée par une force magnétique contre le châssis (1), au niveau des points d'appui (B3, B4, B5).
